# DEMANDE DE BREVET EUROPEEN

(11) **EP 0 959 639 A2**
(43) Date de publication de la demande: **24.11.1999**
(21) Numéro de dépôt: 99400944.7
(22) Date de dépôt: 19.04.1999
(51) Int. Cl.: H04Q 11/00

(54) **Matrice de commutation optique sécurisée**

(30) Priorité: 21.04.1998 US 82509 P
(71) Demandeur: ALCATEL, 75008 Paris (FR)
(72) Inventeur: Sotom, Michel, 75015 Paris (FR); Lebouette, Claude, 91220 Bretigny sur Orge (FR); Ollivier, François-Xavier, 91630 Guibeville (FR); Franceus, Guy, 91630 Cheptainville (FR)
(74) Mandataire: Sciaux, Edmond

(57) **Abrégé**

Matrice de commutation optique sécurisée, à N entrées et N sorties, comportant un noyau de commutation optique (S2, S2'), une interface d'entrée (S1) réalisant une conversion de longueur d'onde, et une interface de sortie (S3) réalisant un filtrage de longueur d'onde. L'interface d'entrée (S1) et l'interface de sortie (S3) sont sécurisées par une redondance réalisée au moyen de r éléments redondants pour un groupe de E éléments exploités, où r est un nombre très inférieur à E.

## Description

L'invention concerne une matrice de commutation optique sécurisée, utilisable notamment comme brasseur pour des liaisons optiques.

Il est connu de réaliser une matrice de commutation optique de grande capacité en la constituant d'un réseau de dispositifs de commutation optique de capacité plus petite. Ces dispositifs de commutation peuvent être tous du type à commutation spatiale, ou tous du type à commutation spectrale, ou un mélange des deux types.

Pour sécuriser une telle matrice, c'est à dire maintenir son fonctionnement sans aucune perte de capacité en cas de défaillance de l'un des dispositifs de commutation, il est connu de doubler chaque étage du réseau par un étage identique qui n'est pas utilisé en temps normal, mais qui est utilisé à la place de l'étage défaillant lorsqu'un des dispositifs de commutation le constituant tombe en panne. Un tel dispositif de sécurisation repose sur une redondance dite de type 1 pour 1, c'est à dire un élément redondant pour chaque élément effectivement exploité. Son principal inconvénient est de doubler le coût de la matrice.

La sécurisation permet en outre d'intervenir sur la matrice, pour l'agrandir en rajoutant des matrices élémentaires, sans interrompre le service.

On connaît diverses architectures pour réaliser une matrice de commutation optique :
- Une première architecture connue comporte plusieurs matrices élémentaires de commutation spatiale, montées en cascade, par exemple selon l'architecture de Clos. Ce type de matrice a pour inconvénients :
   - De fortes pertes d'insertion, qui ne peuvent pas être compensées simultanément dans les deux plages de longueurs d'onde optiques qui sont utilisées couramment : 1300 et 1550 nm. Cela a pour conséquence une limitation de la taille maximale des matrices optiques réalisables selon cette architecture.
   - La sécurisation nécessite a priori une redondance du type 1 pour 1, pour l'ensemble de la matrice, ce qui est coûteux.
   - Le nombre des matrices élémentaires qui doivent être montées en cascade est élevé, ce qui se traduit par un coût élevé.
- Une seconde architecture connue comporte plusieurs matrices élémentaires de commutation spectrale, ou une combinaison de matrices élémentaires de commutation spatiale et de matrices élémentaires de commutation spatiale. Cette dernière combinaison permet de réaliser une matrice de grande taille, mais cette seconde architecture a, elle aussi, pour inconvénient de nécessiter a priori une redondance de type 1 pour 1, pour l'ensemble de la matrice si on souhaite une sécurisation.

Le but de l'invention est de proposer une matrice optique sécurisée qui soit moins coûteuse à réaliser.

L'objet de l'invention est une matrice de commutation optique sécurisée, à N entrées et N sorties, comportant un noyau de commutation optique, une interface d'entrée réalisant une conversion de longueur d'onde, et une interface de sortie réalisant un filtrage de longueur d'onde,
**caractérisée** en ce que l'interface d'entrée et l'interface de sortie sont sécurisées par une redondance réalisée au moyens de **r** éléments redondants pour **E** éléments exploités, où **r** est un nombre très inférieur à **E**.

La matrice ainsi caractérisée est moins coûteuse qu'une matrice sécurisée connue parce que le coût de l'interface d'entrée et de l'interface de sortie est augmenté seulement dans la proportion **r/E** au lieu d'être doublé.

Selon un premier mode de réalisation, l'interface d'entrée comporte au moins un groupe de **E** convertisseurs de longueur d'onde exploités, et **r** convertisseurs redondants, qui sont tous accordés en permanence sur une même longueur d'onde.

Selon un deuxième mode de réalisation, l'interface d'entrée comporte au moins un groupe de **E** convertisseurs de longueur d'onde exploités et **r** convertisseurs redondants, qui sont tous accordables dans une même bande de longueurs d'onde.

Selon un troisième mode de réalisation, l'interface d'entrée comporte au moins un groupe de **E** convertisseurs de longueur d'onde exploités, qui sont tous accordés en permanence respectivement sur **E** longueurs d'onde distinctes, et **r** convertisseurs redondants qui sont tous accordables sur l'une quelconque de ces **E** longueurs d'onde.

Selon un quatrième mode de réalisation, l'interface de **sortie** comporte au moins un groupe de **E** filtres de longueur d'onde exploités et **r** filtres redondants, qui sont tous accordables sur une même gamme de longueurs d'onde.

Selon un cinquième mode de réalisation, l'interface de sortie comporte au moins un groupe de **E** filtres de longueur d'onde exploités et **r** filtres redondants, qui sont tous accordés en permanence sur une même longueur d'onde.

Selon un sixième mode de réalisation, l'interface de sortie comporte au moins un groupe de **E** filtres de longueur d'onde exploités qui sont tous accordés en permanence respectivement sur **E** longueurs d'onde distinctes, et **r** filtres redondants qui sont tous accordables sur l'une quelconque de ces **E** longueurs d'onde.

L'invention sera mieux comprise et d'autres caractéristiques apparaîtront à l'aide de la description ci-dessous et des figures l'accompagnant :
- La figure 1 représente le schéma synoptique d'un exemple de matrice selon l'invention .
- Les figures 2a et 2b représentent le schéma synoptique plus détaillé d'un premier mode de réalisation de cet exemple.
- Les figures 3a et 3b représentent le schéma synoptique plus détaillé d'un deuxième mode de réalisation de cet exemple.
- Les figures 4a et 4b représentent le schéma synoptique plus détaillé d'un troisième mode de réalisation de cet exemple.
- Les figures 5a et 5b représentent le schéma synoptique plus détaillé d'un quatrième mode de réalisation de cet exemple.
- Les figures 6a et 6b représentent le schéma synoptique plus détaillé d'un cinquième mode de réalisation de cet exemple.
- Les figures 7a et 7b représentent le schéma synoptique plus détaillé d'un sixième mode de réalisation de cet exemple.

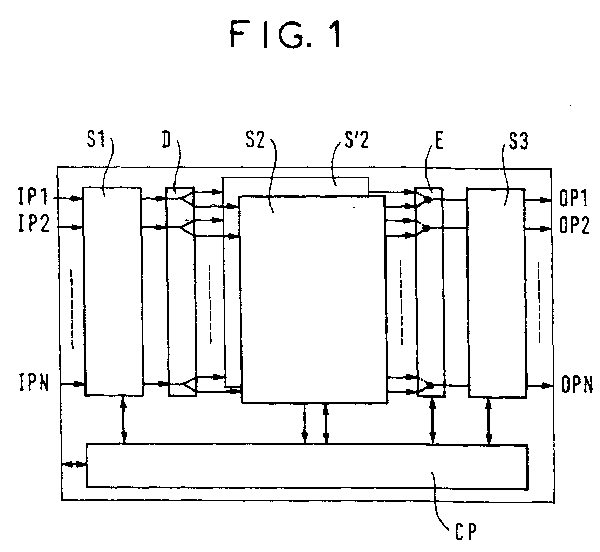

Le schéma synoptique représenté sur la **figure 1** est celui d'un exemple de matrice à N entrées et N sorties, comportant une interface d'entrée S1, un noyau S2-S2', et une interface de sortie S3. Par exemple, N =128. Dans cet exemple, le noyau S2-S2' ne comporte qu'un seul étage, constitué d'une seule matrice de commutation, mais l'invention est applicable aussi si le noyau comporte un réseau de matrices réparties en plusieurs étages.

L'interface d'entrée S1 est constituée par un premier étage comportant N ports d'entrée IP1, IP2,..., IPN, recevant respectivement des signaux optiques sur des porteuses ayant toutes une longueur d'onde de 1310 nm par exemple. Il possède N sorties qui sont couplées au noyau S2-S2' de la matrice par un ensemble D de N diviseurs optiques. Le noyau S2-S2' est constitué d'un deuxième étage comportant deux matrices S2 et S2' identiques, en parallèle pour sécuriser le noyau de manière classique, c'est à dire par une redondance du type 1 pour 1.

L'ensemble D divise les signaux optiques issus du premier étage S1 et les transmet en parallèle aux N entrées de chacune des deux matrices S2 et S2'. Ces deux matrices S2 et S2' sont à commutation spectrale, ou mixte : spatiale-spectrale. Elles ont chacune N sorties. L'interface de sortie est constituée par un troisième étage S3 ayant N entrées qui sont couplées au deuxième étage S2-S2' par un ensemble E de N inverseurs optiques ayant chacun deux entrées optiques et une sortie, l'ensemble E étant commandé électriquement pour transmettre soit les signaux optiques fournis par les N sorties de la matrice S2, soit ceux fournis par les N sorties de la matrice S2'.

Le premier étage S1 a pour fonctions :
- d'extraire certaines données du surdébit SONET ou SDH, permettant de gérer les erreurs de transmission, surveiller les performances, et superviser la connectivité;
- et d'adapter et de régénérer les signaux optiques (Régénération de niveau, de forme, et resynchronisation).

Il régénère les signaux optiques par un traitement électronique classique puis les ré-émet sur une pluralité de longueurs d'onde différentes, λ1,..., λp, toutes situées dans une même bande, centrée sur 1550 nm par exemple, qui est appropriée pour des amplificateurs optiques situés en aval dans le deuxième étage. Cette pluralité de longueurs d'onde distinctes permet de réaliser une commutation spectrale dans le deuxième étage. Ce premier étage S1 est sécurisé par une redondance de type r pour N, où r est très inférieur à N, et sera décrit plus en détail dans ce qui suit.

Le troisième étage S3 filtre les longueurs d'onde des signaux issus du deuxième étage S2-S2', pour éliminer le bruit, puis il les convertit pour les ramener toutes à une même valeur, 1310 nm par exemple. Il réalise aussi, si nécessaire, une régénération des signaux. Ce troisième étage S3 possède N sorties qui constituent les ports de sortie OP1,..., OPN, de la matrice. Ce troisième étage S3 est sécurisé par une redondance de type r pour N, où r est très inférieur à N, et sera décrit plus en détail dans ce qui suit. Les moyens utilisés pour faire une conversion de longueur d'onde à 1310 nm et pour régénérer éventuellement les signaux dans le troisième étage S3 seront omis dans la description des modes de réalisation pour simplifier cette description. Ces moyens sont classiques.

Une plate-forme de commande CP commande les composants des trois étages S1, S2-S2', S3 et de l'ensemble D, en fonction de signaux de signalisation, notamment pour commander le basculement de la matrice S2 à la matrice S2' ou inversement.

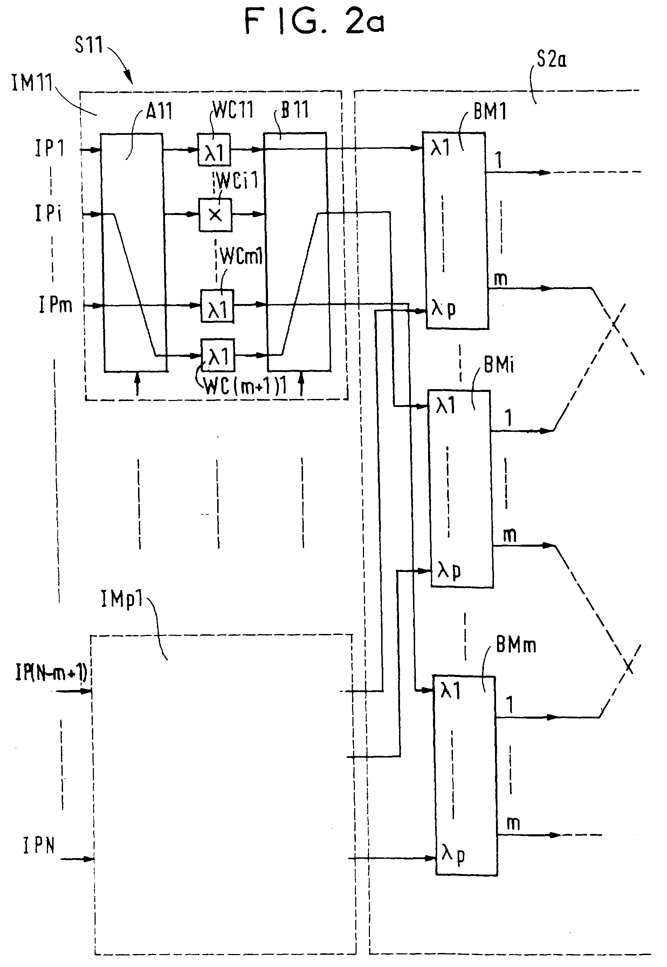

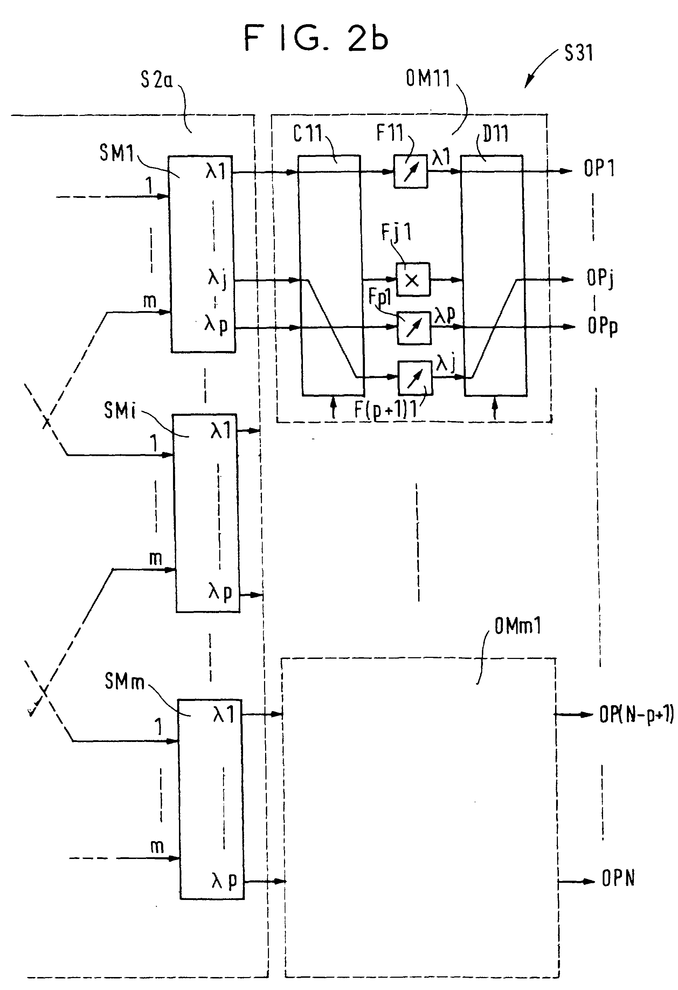

Les **figures 2a et 2b** représentent le schéma synoptique plus détaillé d'un premier mode de réalisation de cet exemple, en omettant la matrice S2', l'ensemble D, l'ensemble E, et la plate-forme de commande CP, pour plus de clarté. Dans ce premier mode de réalisation, le noyau S2-S2' comporte une matrice S2a à commutation mixte spectrale-spatiale.

La matrice S2a comprend :
- Un premier étage constitué de m modules de diffusion BM1 ..., BMm , de réalisation classique. Chaque module de diffusion a m sorties, et p entrées destinées à recevoir chacune un signal optique ayant une longueur d'onde porteuse fixée, respectivement λ1 λp, qui est propre à chaque entrée du module considéré, m et p étant deux nombres entiers choisis tels que N = m x p . Par exemple, pour N=128 on peut choisir p=16 et m=8.
- Un deuxième étage constitué de p modules de sélection SM1,..., SMm, de réalisation classique. Chaque module de sélection SM1,..., SMm a m entrées reliées respectivement à une sortie de chacun des m modules de diffusion BM1,..., BMm . Chacun a p sorties destinées à fournir chacune un signal optique ayant une longueur d'onde porteuse fixée, respectivement λ1,..., λp, qui est propre à chaque sortie de ce module.

Les m modules de sélection SM1,..., SMm sont identiques. Ils ont chacun p sorties reliées respectivement à p entrées du troisième étage S31, via l'ensemble d'inverseurs D non représenté. Chaque module SM1,..., ..., SMm comporte un amplificateur optique (non représenté), sur chacune de ses sorties, pour compenser l'atténuation due à la traversée de la matrice. Ces amplificateurs permettent de réaliser une matrice ayant un grand nombre d'étages et donc ayant une grande capacité. Chaque amplificateur a une bande passante centrée sur 1550 nm et comprenant toutes les longueurs d'onde λ1,..., λp émises par le premier étage S1.

Dans le mode de réalisation représenté sur les figures 2a et 2b, le premier étage S11 comprend p modules IM11 ..., IMp1, identiques. Par exemple, le module IM11 comporte :
- un commutateur d'entrée A11 commandé par un signal électrique fourni par la plate-forme de commande CP non représentée;
- m+1 convertisseurs de longueur d'onde WC11,..., WC(m+1)1 ayant m+1 entrées respectivement couplées à m+1 sorties du commutateur d'entrée A11, et ayant m+1 sorties ; tous les convertisseurs d'un même module émettant sur une même longueur d'onde fixée, respectivement λ1,...,λp, pour les modules IM11 IMp1 ;
- un commutateur de sortie B11 commandé par un signal électrique fourni par la plate-forme de commande CP.

Le commutateur d'entrée A11 comporte m entrées et m+1 sorties. Ses m entrées constituent les ports IP1,..., IPm. Lorsque tous les convertisseurs WC11, ..., WCm1 fonctionnent correctement, il est commandé pour connecter son entrée de rang k à sa sortie de rang k pour k=1 à m. Ses m+1 sorties sont reliées respectivement aux m+1 entrées des m+1 convertisseurs WC11, ..., WC(m+1)1.

Le commutateur de sortie B11 comporte m+1 entrées et m sorties. Ses m+1 entrées sont respectivement couplées aux m+1 sorties des m+1 convertisseurs WC11 ..., WC(m+1)1, et ses m sorties sont couplées respectivement à une entrée de chacun des m modules de diffusion BM1 ..., BMm, de la matrice S2a via l'ensemble D non représenté. Lorsque tous les convertisseurs fonctionnent correctement, il est commandé pour connecter son entrée de rang k à sa sortie de rang k pour k=1 à m.

Il y a un convertisseur redondant WC(m+1)1 identique aux m convertisseurs WC11 ..., WCm1 exploités. En cas de défaillance du convertisseurs WCi1, par exemple, la plate-forme de commande CP commande les commutateurs A11 et B11 pour que le port d'entrée IPi soit relié à l'entrée du convertisseur redondant WC(m+1)1 au lieu de l'entrée du convertisseur défaillant WCi1 ; et pour que la sortie de rang i du commutateur B11 soit reliée à la sortie du convertisseur redondant WC(m+1)1 au lieu de la sortie du convertisseur défaillant WCi1 .

L'étage S31 comprend m modules identiques OM11,..., OMm1. Par exemple, le module OM11 comporte :
- un commutateur d'entrée C11 commandé par un signal électrique fourni par la plate-forme de commande CP ;
- p+1 filtres de longueur d'onde F11,..., F(p+1)1, accordables individuellement sous la commande d'un signal électrique fourni par la plate-forme de commande CP, pour élimer le bruit ;
- et un commutateur de sortie D11 commandé par un signal électrique fourni par la plate-forme de commande .

Le commutateur d'entrée C11 comprend p entrées et p+1 sorties. Ses p+1 sorties sont reliées respectivement aux p+1 entrées des filtres F11,..., F(p+1)1. Lorsque tous les filtres F11,...,Fp1 fonctionnent correctement, il est commandé pour connecter son entrée de rang k à sa sortie de rang k pour k=1 à p.

Le commutateur de sortie D11 comprend p+1 entrées et p sorties ; les p sorties constituant respectivement les ports de sortie OP1,..., OPp de la matrice, et ses p +1 entrées étant reliées respectivement à une sortie de chacun des p+1 filtres accordables F11, ..., F(p+1)1. Lorsque tous les filtres F11,...,Fp1 fonctionnent correctement, il est commandé pour connecter son entrée de rang k à sa sortie de rang k pour k=1 à p.

Les filtres F11 ..., F(p+1)1 sont accordés respectivement sur les longueurs d'onde λ1,..., λ p, pour éliminer le bruit. Il y a un filtre redondant F(p+1)1 identique aux p filtres exploités F11,..., Fp1. En cas de défaillance du filtre Fj1 par exemple, la plate-forme de commande CP commande les commutateurs C11 et D11 pour que la sortie de rang j du module de sélection SM1,..., soit reliée à l'entrée du filtre redondant F(p+1)1 au lieu de celle du filtre défaillant Fj1 ; et pour que la sortie de rang j du commutateur D1, constituant le port de sortie Opj, soit reliée à la sortie du convertisseur redondant F(p+1)1 au lieu de celle du convertisseur défaillant Fj1.

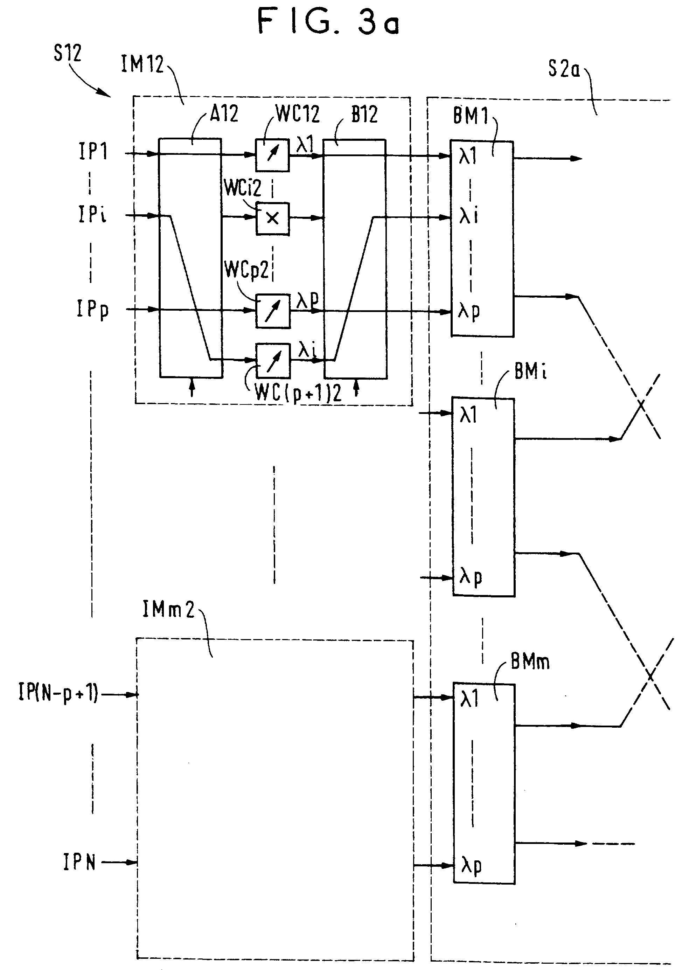

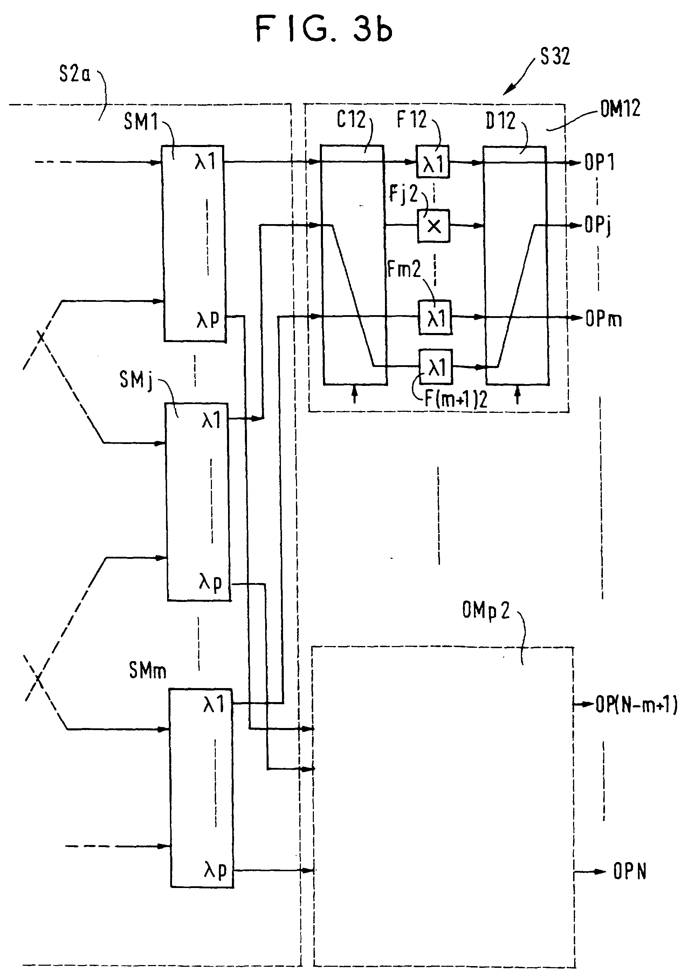

Les **figures 3a et 3b** représentent le schéma synoptique plus détaillé d'un deuxième mode de réalisation de cet exemple, en omettant la matrice S2a, l'ensemble D, l'ensemble E, et la plate-forme de commande CP, pour plus de clarté. La matrice S2a constituant le deuxième étage est la même que celle décrite ci-dessus.

Le premier étage S12 de la matrice comprend m modules lM12,. .., IMm2, identiques. Par exemple, le module Im1 2 comporte :
- un commutateur d'entrée A12 commandé par un signal électrique fourni par la plate-forme de commande CP non représentée;
- p+1 convertisseurs de longueur d'onde WC12 ..., WC(p+1)2, accordables individuellement sous la commande d'un signal électrique fourni par la plate-forme de contrôle CP;
- et un commutateur de sortie B12 commandé par un signal électrique fourni par la plate-forme de commande CP .

Le commutateur d'entrée A12 comporte p entrées et p+1 sorties . Les p+1 sorties sont respectivement reliées aux p+1 entrées des p+1 convertisseurs de longueur d'onde WC12,..., WC(p+1)2. Lorsque tous les convertisseurs WC12,..., WCp2 fonctionnent correctement, il est commandé pour connecter son entrée de rang k à sa sortie de rang k pour k=1 à p.

Les convertisseurs accordables WC12,..., WC(p+1)2 possèdent p+ 1 sorties reliées aux p+1 entrées du commutateur B12. Les p convertisseurs d'un même module émettant respectivement sur p longueurs d'onde distinctes (respectivement λ1,..., λp).

Le commutateur de sortie B12 comporte p+1 entrées et p sorties. Ses p sorties sont reliées respectivement aux p entrée du module BM1 de la matrice S2a via l'ensemble D non représenté. Lorsque tous les convertisseurs WC12, ..., WCp2 fonctionnent correctement, il est commandé pour connecter son entrée de rang k à sa sortie de rang k pour k=1 à p.

Il y a un convertisseur redondant WC(p+1)2 identique aux p convertisseurs WC12, ..., WCp2 exploités. En cas de défaillance du convertisseurs WCi2, par exemple, la plate-forme de commande CP commande les commutateurs A12 et B12 pour que le port d'entrée IPi soit relié à l'entrée du convertisseur redondant WC(p+1)2 au lieu de l'entrée du convertisseur défaillant WCi2 ; et pour que la sortie de rang i du commutateur B12 soit reliée à la sortie du convertisseur redondant WC(p+1)2 au lieu de la sortie du convertisseur défaillant WCi2. La plate-forme de commande CP accorde le convertisseur redondant WC(p+1)2 sur la longueur d'onde λi qu'utilisait le convertisseur défaillant Wci2 avant sa défaillance.

Le troisième étage S32 comprend p modules OM12, ..., OMp2 identiques sauf qu'une longueur d'onde distincte (respectivement λ1,..., λp) est attribuée à chacun. Par exemple, le module OM12 comporte :
- un commutateur d'entrée C12 commandé par un signal électrique fourni par la plate-forme de commande CP ;
- m+1 filtres F12,..., F(m+1)2, tous accordés en permanence sur une longueur d'onde fixe, λ1 , propre au module OM12 pour élimer le bruit ;
- et un commutateur de sortie D12 commandé par un signal électrique fourni par la plate-forme de commande CP.

Le commutateur d'entrée C12 comporte m entrées, m +1 sorties. Les m entrées sont reliées respectivement à une sortie de chacun des m modules de sortie SM1,..., SMm de la matrice S2a. Les m+1 filtres F12,..., F(m+1)2 possèdent m+1 entrées respectivement reliées aux m+1 sorties du commutateur d'entrée C12, et m+1 sorties. Lorsque tous les filtres F12,..., Fm2 fonctionnent correctement, le commutateur C12 est commandé pour connecter son entrée de rang k à sa sortie de rang k pour k=1 à m.

Le commutateur de sortie D12 comporte m+1 entrées et m sorties ; les m sorties constituant respectivement m ports de sortie OP1,..., OPm de la matrice. Lorsque tous les filtres F12,..., Fm2 fonctionnent correctement, il est commandé pour connecter son entrée de rang k à sa sortie de rang k pour k=1 à m.

Il y a un filtre redondant F(m+1)2 identique aux filtres exploités F12,..., Fm2. En cas de défaillance du filtre Fj2 par exemple, la plate-forme de commande CP commande les commutateurs C12 et D12 pour que la sortie de rang j du module de sélection Smj soit reliée à l'entrée du filtre redondant F(m+1)2 au lieu de celle du filtre défaillant Fj2 ; et pour que la sortie de rang j du commutateur D12, constituant le port de sortie OPj, soit reliée à la sortie du convertisseur redondant F(m+1)2 au lieu de celle du convertisseur défaillant Fj2.

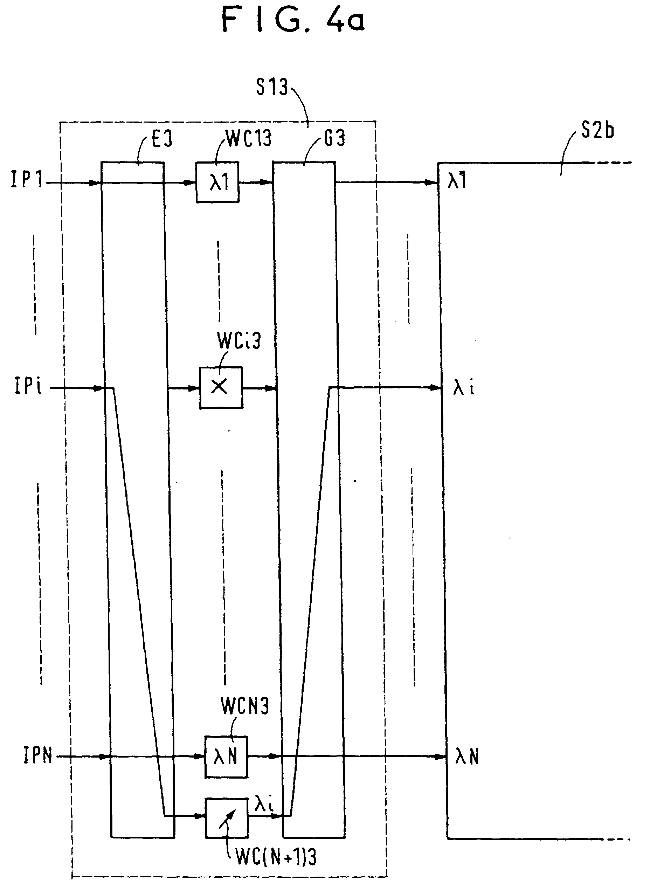

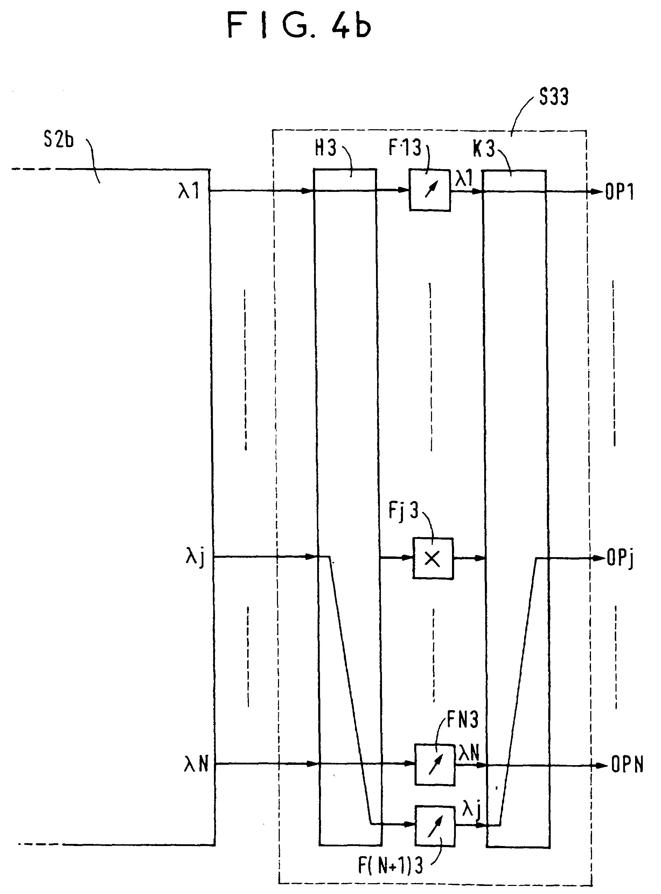

Les **figures 4a et 4b** représentent le schéma synoptique plus détaillé d'un troisième mode de réalisation de cet exemple. Dans ce troisième mode de réalisation, le noyau S2-S2' comporte une matrice classique S2b, à commutation purement spectrale, sécurisée par une matrice identique non représentée. L'ensemble D, l'ensemble E, et la plate-forme de commande CP, ne sont pas représentés pour plus de clarté. Les signaux d'entrée ont par exemple une longueur d'onde de 1310 nm, alors que la matrice S2b est prévue pour commuter des signaux ayant longueurs d'onde λ1,..., λN situées dans une bande centrée sur 1550 nm par exemple.

Le premier étage S13 comporte :
- un commutateur d'entrée E3 commandé par un signal électrique fourni par la plate-forme de commande CP non représentée;
- N+1 convertisseurs de longueur d'onde WC13, ..., WCN3, émettant respectivement sur des longueurs d'onde fixes λ1, ..., λN ; et un convertisseur redondant WC(N+1)3 accordable sur l'une quelconque de ces longueurs d'onde ;
- et un commutateur de sortie G3 commandé par un signal électrique fourni par la plate-forme de commande CP non représentée.

Le commutateur d'entrée E3 comporte N entrées et N+1 sorties. Ses N+1 sorties sont respectivement reliées aux N+1 entrées des convertisseurs WC13, ..., WCN3, WC(N+1)3. Lorsque tous les convertisseurs WC13, ..., WCN3 fonctionnent correctement, il est commandé pour connecter son entrée de rang k à sa sortie de rang k pour k=1 à N.

Le commutateur de sortie G3 possède N+1 entrées reliées respectivement aux sorties des convertisseurs WC13, ..., WCN3, WC(N+1)3 ; et possède N sorties reliées respectivement aux N entrées de la matrice S2b. Lorsque tous les convertisseurs WC13, ..., WCN3 fonctionnent correctement, il est commandé pour connecter son entrée de rang k à sa sortie de rang k pour k=1 à N.

Il y a un convertisseur redondant WC(N+1)3 pour N convertisseurs WC1, ..., WCN exploités. C'est un convertisseur accordable dans la gamme λ1, ..., λN. En cas de défaillance du convertisseurs WCi3, par exemple, la plate-forme de commande CP commande le commutateur E3 pour que le port d'entrée IPi soit relié à l'entrée du convertisseur redondant WC(N+1)3 au lieu de l'entrée du convertisseur défaillant WCi3; et commande le commutateur G3 pour que la sortie de rang i du commutateur G3 soit reliée à la sortie du convertisseur redondant WC(N+1)3 au lieu de la sortie du convertisseur défaillant WCi3.

Le troisième étage S33 comporte :
- un commutateur d'entrée H3 commandé par un signal électrique fourni par la plate-forme de commande CP ;
- N+1 filtres identiques F13, ..., F(N+1)3, accordables sous la commande d'un signal électrique fourni par la plate-forme de commande CP ;
- et un commutateur de sortie K3 commandé par un signal électrique fourni par la plate-forme de commande CP.

Le commutateur d'entrée H3 comporte N entrées et N+1 sorties. Ses N+1 sorties sont respectivement reliées aux N+1 entrées des filtres F13 F(N+1)3. Lorsque tous les filtres F13, ..., FN3 fonctionnent correctement, il est commandé pour connecter son entrée de rang k à sa sortie de rang k pour k=1 à N.

Le commutateur de sortie K3 comporte N+1 entrées reliées respectivement aux sorties des N+1 filtres F13, ..., F(N+1)3; et posssède N sorties constituant respectivement les N ports de sortie OP1,..., OPN de la matrice.

Les filtres F13, ..., FN3 sont accordés respectivement sur les longueurs d'onde λ1,..., λN pour éliminer le bruit. Il y a un filtre redondant F(N+1)3 pour N filtres F13, ..., FN3 exploités. En cas de défaillance du convertisseurs WCj3, par exemple, la plate-forme de commande CP commande les commutateurs H3 et K3 pour que le port d'entrée IPj soit relié à l'entrée du filtre redondant F(N+1)3 au lieu de l'entrée du filtre défaillant Fj3; et pour que la sortie de rang j du commutateur K3 soit reliée à la sortie du filtre redondant F(N+1)3 au lieu de la sortie du filtre défaillant Fj3.

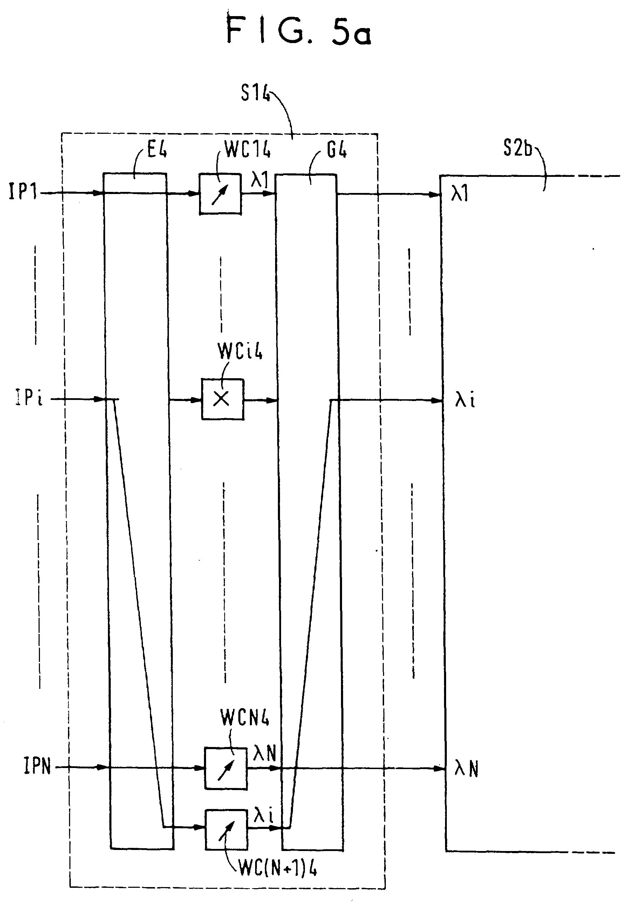

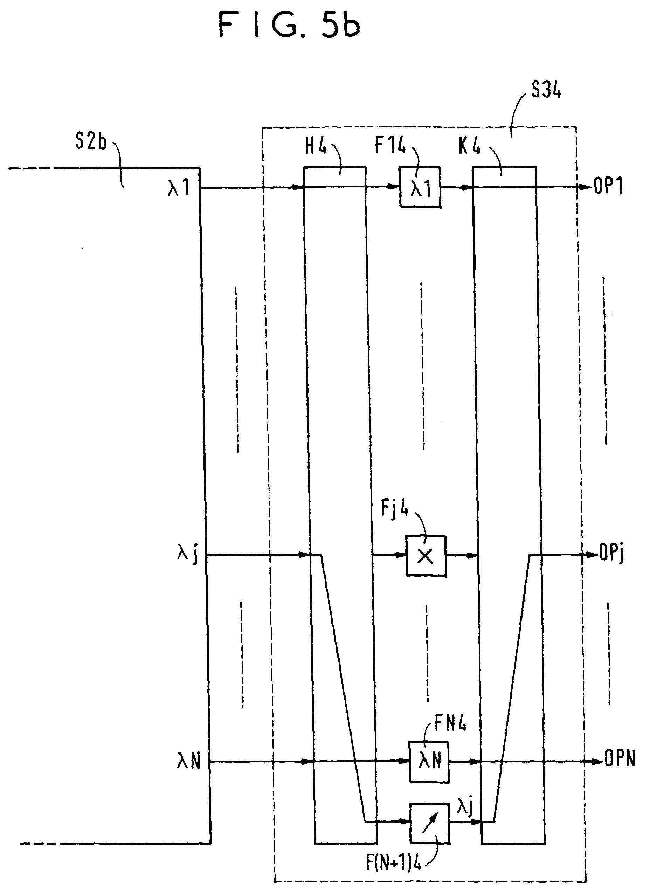

Les **figures 5a et 5b** représentent le schéma synoptique plus détaillé d'un quatrième mode de réalisation de cet exemple. Dans ce quatrième mode de réalisation, le noyau S2-S2' comporte une matrice classique S2b, à commutation purement spectrale, sécurisée par une matrice identique non représentée. L'ensemble D, l'ensemble E, et la plate-forme de commande CP, ne sont pas représentés pour plus de clarté. Les signaux d'entrée ont par exemple une longueur d'onde de 1310 nm, alors que la matrice S2b est prévue pour commuter des signaux ayant longueurs d'onde λ1,..., λN situées dans une bande centrée sur 1550 nm par exemple.

Le premier étage S14 comporte :
- un commutateur d'entrée E4 commandé par un signal électrique fourni par la plate-forme de commande CP non représentée ;
- N+1 convertisseurs de longueur d'onde, accordables, WC14, ·····, WCN4, WC(N+1)4, identiques, accordables sur l'une quelconque des longueurs d'onde λ1, ..., λN, sous la commande d'un signal électrique fourni par la plate-forme de commande CP;
- et un commutateur de sortie G4 commandé par un signal électrique fourni par la plate-forme de commande CP.

Le commutateur d'entrée E4 comporte N entrées et N+1 sorties. Ses N+1 sorties sont respectivement reliées aux N+1 entrées des convertisseurs WC14, ......, WCN4, WC(N+1)4. Lorsque tous les convertisseurs WC14, ..., WCN4 fonctionnent correctement, il est commandé pour connecter son entrée de rang k à sa sortie de rang k pour k=1 à N.

Le commutateur de sortie G4 possède N+1 entrées reliées respectivement aux sorties des convertisseurs WC14, ....., WCN4, WC(N+1)4 ; et possède N sorties reliées respectivement aux N entrées de la matrice S2b. Lorsque tous les convertisseurs WC14,..., WCN4 fonctionnent correctement, il est commandé pour connecter son entrée de rang k à sa sortie de rang k pour k=1 à N.

Les convertisseurs sont accordés respectivement sur les longueurs d'onde λ1,..., λN. Il y a un convertisseur redondant WC(N+1)4 pour N convertisseurs WC1, ..., WCN exploités. En cas de défaillance du convertisseur WCi4, par exemple, la plate-forme de commande CP commande les commutateurs E4 et G4 pour que le port d'entrée IPi soit relié à l'entrée du convertisseur redondant WC(N+1)4 au lieu de l'entrée du convertisseur défaillant WCi4; et pour que l'entrée de rang i du commutateur G4 soit reliée à la sortie du convertisseur redondant WC(N+1)3 au lieu de la sortie du convertisseur défaillant WCi4.

Le troisième étage S34 comporte :
- un commutateur d'entrée H4 commandé par un signal électrique fourni par la plate-forme de commande CP non représentée;
- N filtres identiques F14, ... , FN4 accordés sur des longueurs d'onde fixes, respectivement λl,..., λN, pour éliminer le bruit ; et un filtre accordable F(N+1)4, accordable sur l'une quelconque de ces longueur d'onde, sous la commande d'un signal électrique fourni par la plate-forme de commande CP;
- et un commutateur de sortie K4 commandé par un signal électrique fourni par la plate-forme de commande CP.

Le commutateur d'entrée H4 comporte N entrées et N+1 sorties. Ses N+1 sorties sont respectivement reliées aux N+1 entrées des filtres F14,..., F(N+1)4. Lorsque tous les filtres F14,..., FN4 fonctionnent correctement, il est commandé pour connecter son entrée de rang k à sa sortie de rang k pour k=1 à N.

Le commutateur de sortie K4 comporte N+1 entrées reliées respectivement aux sorties des N+1 filtres F14,..., F(N+1)4; et posssède N sorties constituant respectivement les N ports de sortie OP1, ... , OPN de la matrice.

Il y a un filtre accordable redondant F(N+1)3 pour N filtres F13,..., FN3, à accord fixe, qui sont exploités en temps normal. En cas de défaillance du filtre Fj4, par exemple, la plate-forme de commande CP commande les commutateurs H4 et K4 pour que son entrée de rang j soit reliée à l'entrée du filtre redondant F(N+1)4 au lieu de l'entrée du filtre défaillant Fj4; et pour que l'entrée de rang j du commutateur K4 soit reliée à la sortie du filtre redondant F(N+1)4 au lieu de la sortie du filtre défaillant Fj4.

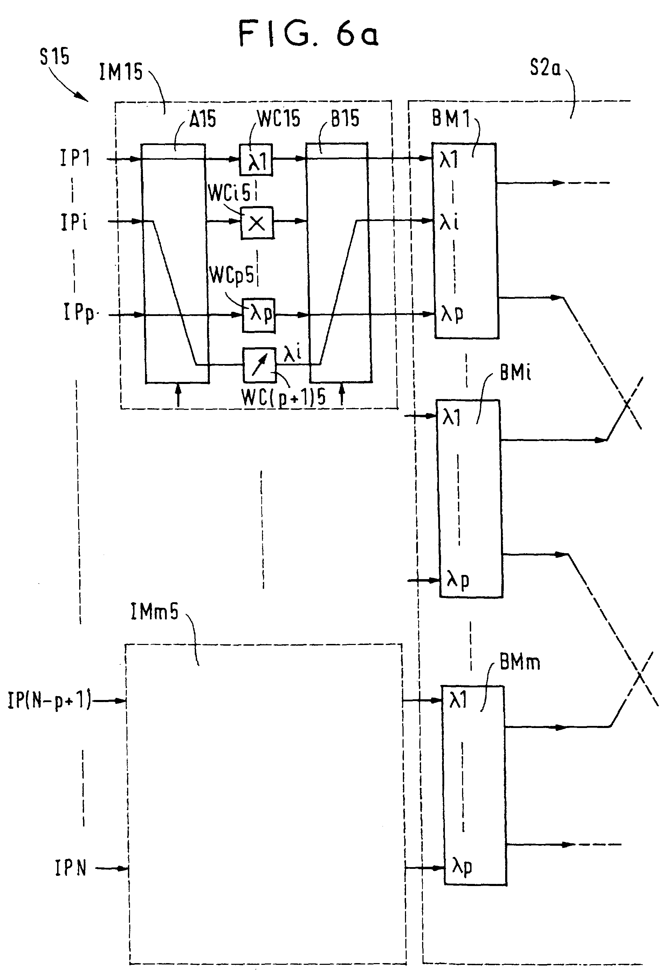

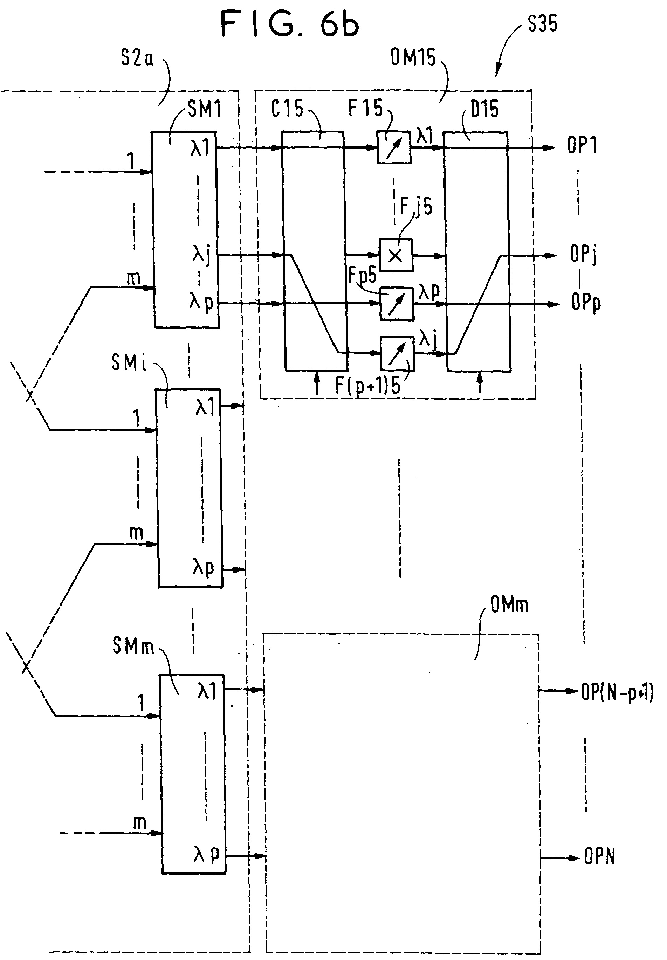

Les **figures 6a et 6b** représentent le schéma synoptique plus détaillé d'un cinquième mode de réalisation de cet exemple, en omettant la matrice S2', l'ensemble D, l'ensemble E, et la plate-forme de commande CP, pour plus de clarté. La matrice S2a constituant le deuxième étage est la même que celle décrite ci-dessus.

Le premier étage S15 de la matrice comprend m modules IM 15, ... , IMm5, identiques. Par exemple, le module IM 15 comporte :
- un commutateur d'entrée A15 commandé par un signal électrique fourni par la plate-forme de commande CP non représentée;
- p convertisseurs de longueur d'onde WC15,..., WCp5 accordés en permanence sur les longueurs d'onde λ1, ..., λp respectivement; et un convertisseur WC(p+1)5, accordable sur l'une quelconque de ces liongueurs d'onde sous la commande d'un signal électrique fourni par la plate-forme de contrôle CP;
- et un commutateur de sortie B15 commandé par un signal électrique fourni par la plate-forme de commande CP non représentée.

Le commutateur d'entrée A15 comporte p entrées et p+1 sorties . Les p+1 sorties sont respectivement reliées aux p+1 entrées des p+1 convertisseurs de longueur d'onde WC15, ..., WC(p+1)5. Lorsque tous les convertisseurs WC15, ..., WCp5 fonctionnent correctement, il est commandé pour connecter son entrée de rang k à sa sortie de rang k pour k=1 à p.

Les convertisseurs WC15, ..., WC(p+1)5 possèdent p+1 sorties reliées aux p+1 entrées du commutateur B15. Le commutateur de sortie B15 comporte p sorties reliées respectivement aux p entrée du module BM1 de la matrice S2a via l'ensemble D non représenté. Lorsque tous les convertisseurs WC15, ..., WCp5 fonctionnent correctement, il est commandé pour connecter son entrée de rang k à sa sortie de rang k pour k=1 à p.

Le convertisseur redondant WC(p+1)5 étant accordable, il peut remplacer l'un quelconque des p convertisseurs WC15, ..., WCp5 exploités. En cas de défaillance du convertisseurs Wci5, par exemple, la plate-forme de commande CP commande les commutateurs A15 et B15 pour que le port d'entrée IPi soit relié à l'entrée du convertisseur redondant WC(p+1)5 au lieu de l'entrée du convertisseur défaillant WCi5 ; et pour que la sortie de rang i du commutateur B15 soit reliée à la sortie du convertisseur redondant WC(p+1)5 au lieu de la sortie du convertisseur défaillant WCi5. La plate-forme de commande CP accorde le convertisseur redondant WC(p+1)5 sur la longueur d'onde λi qu'utilisait le convertisseur défaillant Wci5 avant sa défaillance.

Le troisième étage S35 comprend m modules identiques OM15, ..., OMm5. Par exemple, le module OM15 comporte :
- un commutateur d'entrée C15 commandé par un signal électrique fourni par la plate-forme de commande CP ;
- p+1 filtres de longueur d'onde F15, ..., F(p+1)5, accordables individuellement sous la commande d'un signal électrique fourni par la plate-forme de commande CP;
- et un commutateur de sortie D15 commandé par un signal électrique fourni par la plate-forme de commande CP.

Le commutateur d'entrée C15 comprend p entrées et p+1 sorties. Ses p+1 sorties sont reliées respectivement aux p+1 entrées des filtres F15, ..., F(p+1)5. Lorsque tous les filtres F15,...,Fp5 fonctionnent correctement, il est commandé pour connecter son entrée de rang k à sa sortie de rang k pour k=1 à p.

Le commutateur de sortie D5 comprend p+1 entrées et p sorties ; les p sorties constituant respectivement les ports de sortie OP1,..., OPp de la matrice, et ses p +1 entrées étant reliées respectivement à une sortie de chacun des p+1 filtres accordables F15, ..., F(p+1)5. Lorsque tous les filtres F15,...,Fp5 fonctionnent correctement, il est commandé pour connecter son entrée de rang k à sa sortie de rang k pour k=1 à p.

Les filtres F15, ..., Fp5 sont accordés respectivement sur les longueurs d'onde λ1, ..., λp, pour éliminer le bruit. Il y a un filtre redondant F(p+1)5 identique aux p filtres exploités F15,..., Fp5. En cas de défaillance du filtre Fj5 par exemple, la plate-forme de commande CP commande les commutateurs C5 et D5 pour que la sortie de rang j du module de sélection SM1 soit reliée à l'entrée du filtre redondant F(p+1)5 au lieu de celle du filtre défaillant Fj5; et pour que la sortie de rang j du commutateur D5, constituant le port de sortie OP5, soit reliée à la sortie du convertisseur redondant F(p+1)5 au lieu de celle du convertisseur défaillant Fj5.

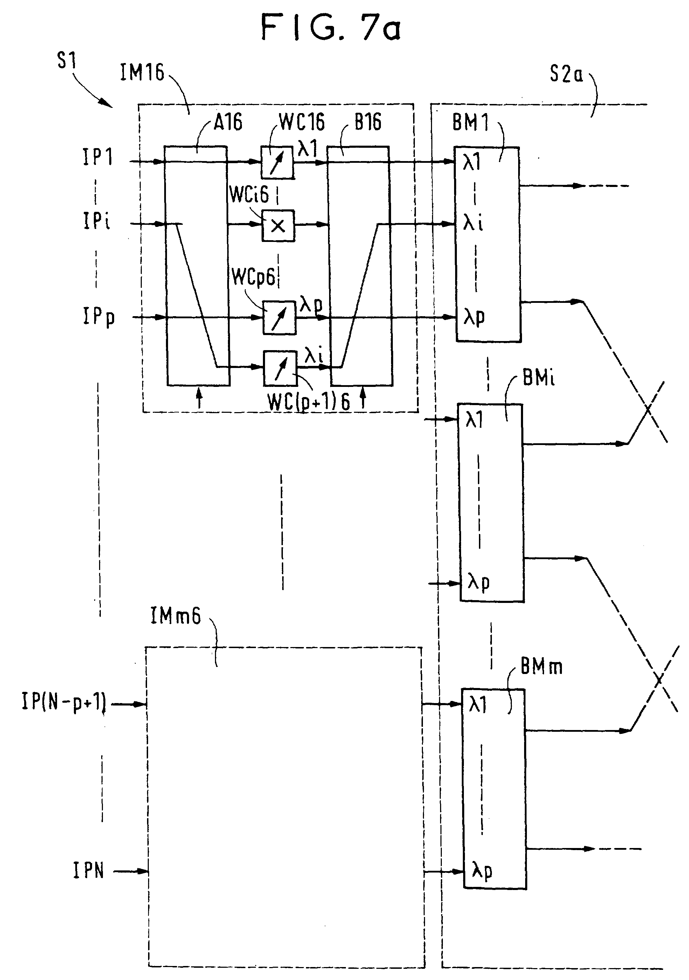

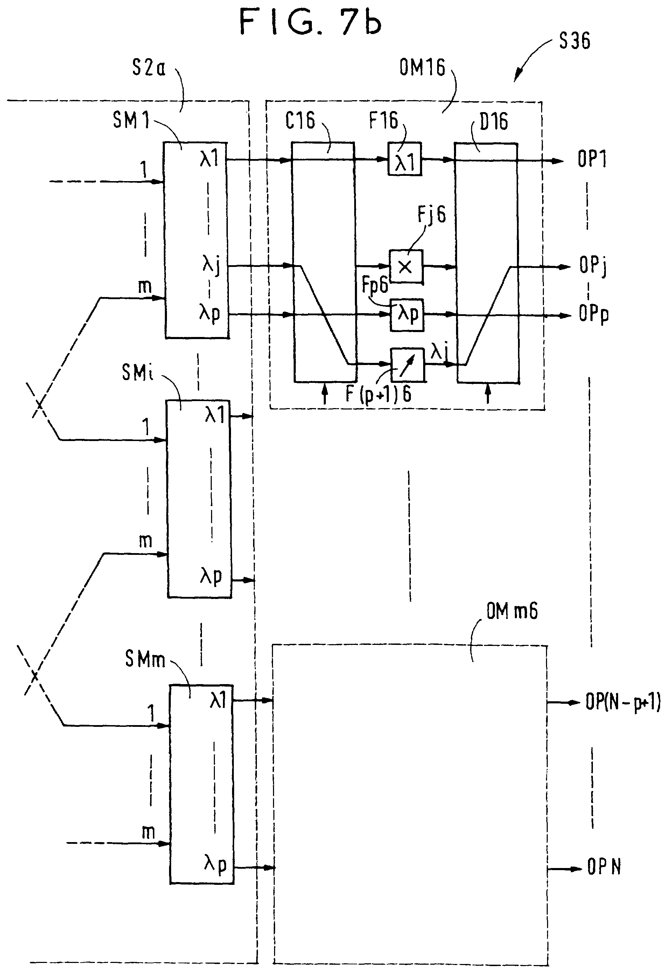

Les **figures 7a et 7b** représentent le schéma synoptique plus détaillé d'un sixième mode de réalisation de cet exemple, en omettant la matrice S2', l'ensemble D, l'ensemble E, et la plate-forme de commande CP, pour plus de clarté. La matrice S2a constituant le deuxième étage est la même que celle décrite ci-dessus.

Le premier étage S16 de la matrice comprend m modules IM16, ... , IMm6, identiques. Par exemple, le module Im16 comporte :
- un commutateur d'entrée Al6 commandé par un signal électrique fourni par la plate-forme de commande CP non représentée;
- p+1 convertisseurs de longueur d'onde WC16, ..., WC(p+1)6, accordables individuellement sous la commande d'un signal électrique fourni par la plate-forme de contrôle CP ;
- et un commutateur de sortie B16 commandé par un signal électrique fourni par la plate-forme de commande CP.

Le commutateur d'entrée A16 comporte p entrées et p+1 sorties . Les p+1 sorties sont respectivement reliées aux p+1 entrées des p+1 convertisseurs de longueur d'onde WC16, ..., WC(p+1)6. Lorsque tous les convertisseurs WC16, ..., WCp6 fonctionnent correctement, il est commandé pour connecter son entrée de rang k à sa sortie de rang k pour k=1 à p.

Les convertisseurs accordables WC1, ..., WC(p+1)6 possèdent p+1 sorties reliées aux p+1 entrées du commutateur B16. Les p convertisseurs d'un même module sont accordés pour émettre respectivement sur p longueurs d'onde distinctes, respectivement λ1, ..., λp.

Le commutateur de sortie B16 comporte p+1 entrées et p sorties. Ses p sorties sont reliées respectivement aux p entrée du module BM1 de la matrice S2a via l'ensemble D non représenté. Lorsque tous les convertisseurs WC16, ..., WCp6 fonctionnent correctement, il est commandé pour connecter son entrée de rang k à sa sortie de rang k pour k=1 à p.

Il y a un convertisseur redondant WC(p+1)6 identique aux p convertisseurs WC16 ..., WCp6 exploités. En cas de défaillance du convertisseurs WCi2, par exemple, la plate-forme de commande CP commande les commutateurs A16 et B16 pour que le port d'entrée IPi soit relié à l'entrée du convertisseur redondant WC(p+1)6 au lieu de l'entrée du convertisseur défaillant WCi6 ; et pour que la sortie de rang i du commutateur B16 soit reliée à la sortie du convertisseur redondant WC(p+1)6 au lieu de la sortie du convertisseur défaillant WCi6. La plate-forme de commande CP accorde le convertisseur redondant WC(p+1)8 sur la longueur d'onde λi qu'utilisait le convertisseur défaillant Wci6 avant sa défaillance.

Le troisième étage S36 comprend m modules OM16,..., OMm6 identiques. Par exemple, le module OM16 comporte :
- un commutateur d'entrée C16 commandé par un signal électrique fourni par la plate-forme de commande CP ;
- p+1 filtres de longueur d'onde F16,..., Fp6 accordés en permanence sur les longueurs d'onde λ1, ..., λp respectivement, pour élimer le bruit ; et un convertisseur F(p+1)6, accordable individuellement sous la commande d'un signal électrique fourni par la plate-forme de commande CP;
- et un commutateur de sortie D16 commandé par un signal électrique fourni par la plate-forme de commande CP.

Le commutateur d'entrée C16 comprend p entrées et p+1 sorties. Ses p+1 sorties sont reliées respectivement aux p+1 entrées des filtres F16, ..., F(p+1)6. Lorsque tous les filtres F16,...,Fp6 fonctionnent correctement, il est commandé pour connecter son entrée de rang k à sa sortie de rang k pour k=1 à p.

Le commutateur de sortie D6 comprend p+1 entrées et p sorties ; les p sorties constituant respectivement les ports de sortie OP1,..., OPp de la matrice, et ses p +1 entrées étant reliées respectivement à une sortie de chacun des p+1 filtres F16, ..., F(p+1)6. Lorsque tous les filtres F16,...,Fp6 fonctionnent correctement, il est commandé pour connecter son entrée de rang k à sa sortie de rang k pour k=1 à p.

Le filtre redondant F(p+1)6 peut remplacer l'un quelconque des p filtres exploités F16,..., Fp6, parce qu'il peut être accordé sur l'une quelconque des longueurs d'onde λ1, ..., λp. En cas de défaillance du filtre Fj6 par exemple, la plate-forme de commande CP commande les commutateurs C6 et D6 pour que la sortie de rang j du module de sélection SM1 soit reliée à l'entrée du filtre redondant F(p+1)6 au lieu de celle du filtre défaillant Fj6; et pour que la sortie de rang j du commutateur D6, constituant le port de sortie OPj, soit reliée à la sortie du convertisseur redondant F(p+1)6 au lieu de celle du convertisseur défaillant Fj6.

## Revendications

1. Matrice de commutation optique sécurisée, à N entrées et N sorties, comportant un noyau de commutation optique (S2-S2'), une interface d'entrée (S1) réalisant une conversion de longueur d'onde, et une interface de sortie (S3) réalisant un filtrage de longueur d'onde,
**caractérisée** en ce que l'interface d'entrée (S1) et l'interface de sortie (S3) sont sécurisées par une redondance réalisée au moyens de r éléments redondants pour E éléments exploités, où r est un nombre très inférieur à E.

2. Matrice selon la revendication 1, caractérisée en ce que l'interface d'entrée comporte au moins un groupe de E convertisseurs de longueur d'onde exploités (WC11,..., WCm1) et r convertisseurs redondants (WC(m+1)1), qui sont tous accordés en permanence sur une même longueur d'onde.

3. Matrice selon la revendication 1, caractérisée en ce que l'interface d'entrée comporte au moins un groupe de E convertisseurs de longueur d'onde exploités (WC12, ... , WCp2 ; WC14, ..., WCN4 ; WC16,... , WCp6) et r convertisseurs redondants (WC(p+1)2 ; WC(N+1)4 ; WC(p+1)6) , qui sont tous accordables dans une même bande de longueurs d'onde.

4. Matrice selon la revendication 1, caractérisée en ce que l'interface d'entrée comporte au moins un groupe de E convertisseurs de longueur d'onde exploités (WC13, ... , WCN3 ; WC15, ... , WCm5), qui sont tous accordés en permanence respectivement sur E longueurs d'onde distinctes, et r convertisseurs redondants (WC(N+1)3 ; WC(m+1)5) qui sont tous accordables sur l'une quelconque de ces E longueurs d'onde.

5. Matrice selon la revendication 1, caractérisée en ce que l'interface de sortie comporte au moins un groupe de E filtres de longueur d'onde exploités (F11, ... , Fp1 ; F13,..., FN3 ; F15, ..., Fp5) et r filtres redondants (F(p+1)1 ; F(N+1)3 ; F(p+1)5) , qui sont tous accordables sur une même gamme de longueurs d'onde.

6. Matrice selon la revendication 1, caractérisée en ce que l'interface de sortie comporte au moins un groupe de E filtres de longueur d'onde exploités (F12, ... , Fp2) et r filtres redondants (F(m+1)2) , qui sont tous accordés en permanence sur une même longueur d'onde.

7. Matrice selon la revendication 1, caractérisée en ce que l'interface de sortie comporte au moins un groupe de E filtres de longueur d'onde exploités (F14, ... , FN4 ; F16, ... Fp6) qui sont tous accordés en permanence respectivement sur E longueurs d'onde distinctes, et r filtres redondants (F(N+1)4 ; F(p+1)6) qui sont tous accordables sur l'une quelconque de ces E longueurs d'onde.
